Europäisches Patentamt

European Patent Office

Office européen des brevets

(11) Numéro de publication : **0 297 011 B1**

(12)

# FASCICULE DE BREVET EUROPEEN

(45) Date de publication du fascicule du brevet :
08.05.91 Bulletin 91/19

(51) Int. Cl.⁵ : **A01D 43/10**

(21) Numéro de dépôt : 88440050.8

(22) Date de dépôt : 23.06.88

(54) Faucheuse conditionneuse perfectionnée.

(30) Priorité : 26.06.87 FR 8709183

(43) Date de publication de la demande :
28.12.88 Bulletin 88/52

(45) Mention de la délivrance du brevet :
08.05.91 Bulletin 91/19

(84) Etats contractants désignés :
AT BE DE ES FR GB IT NL

(56) Documents cités :
DE-A- 2 230 245
DE-A- 2 231 624

(56) Documents cités :
DE-A- 3 233 560
FR-A- 2 108 290
GB-A- 2 020 156
GB-A- 2 056 835
US-A- 2 679 719
US-A- 3 881 305
US-A- 4 199 927

(73) Titulaire : KUHN S.A.
4, Impasse des Fabriques
F-67700 Saverne (FR)

(72) Inventeur : Haberkorn, Jean-Paul
11, rue Sainte-Barbe Monswiller
F-67700 Saverne (FR)

Jouve, 18, rue Saint-Denis, 75001 PARIS

## Description

La présente invention concerne une faucheuse-conditionneuse comportant au moins un groupe de fauche muni d'organes de coupe tournant autour d'axes dirigés vers le haut et un groupe de conditionnement associé audit groupe de fauche et muni de rouleaux de conditionnement entre lesquels passe le fourrage coupé par les organes de coupe, lesdits rouleaux de conditionnement étant guidés en rotation à chacune de leurs extrémités dans un palier solidaire d'une paroi latérale correspondante.

De telles faucheuses-conditionneuses sont employées pour faucher le fourrage, puis traiter mécaniquement le fourrage coupé en vue d'accélérer son séchage. Ce traitement mécanique est réalisé par les deux rouleaux qui s'étendent derrière la zone de coupe des organes de coupe et entre lesquels passe le fourrage coupé par les organes de coupe.

Le fourrage coupé par les organes de coupe est forcé à passer entre les rouleaux par l'action simultanée de projection réalisée par les organes de coupe tournant et de happement réalisée par les rouleaux.

Afin que tout le fourrage subisse le traitement souhaité, il faut que l'ensemble du fourrage coupé passe entre les rouleaux. Or, il a pu être constaté dans certaines conditions de fourrage, qu'une partie du fourrage coupé par les organes de coupe s'étendant dans le voisinage des parois latérales supportant les rouleaux, arrivait à ne pas passer entre les rouleaux. Ceci est inacceptable d'une part parce que ce fourrage n'aura pas subi de traitement et d'autre part parce qu'il sera difficile à ramasser ultérieurement.

Dans le DE-A-2 231 624 on connaît une faucheuse-conditionneuse comme celle décrite ci-avant, qui comporte dans le voisinage de chaque paroi latérale un déflecteur s'étendant au moins partiellement dans le flux du fourrage coupé et projeté vers l'arrière par la paire d'organes de coupe agencés près de ladite paroi latérale. Lesdits déflecteurs sont verticaux et sont dirigés de manière inclinée vers l'arrière, compte tenu du sens de travail et vers la partie médiane de la faucheuse-conditionneuse. Du reste, la partie desdits déflecteurs destinée à s'étendre au moins partiellement dans le flux du fourrage coupé et projeté vers l'arrière est sensiblement plane. En vue de dessus, chaque déflecteur s'étend entre l'organe de coupe d'extrémité correspondant du groupe de fauche et la paroi latérale correspondante du groupe de conditionnement. De cette sorte, les rouleaux de conditionnement du groupe de conditionnement s'étendant relativement loin derrière les organes de coupe du groupe de fauche. Le fourrage coupé et projeté vers l'arrière par les organes de coupe doit ainsi parcourir une distance relativement importante avant d'arriver dans la zone de happement des rouleaux de conditionnement. Ceci est notamment vrai pour le fourrage qui est projeté contre les déflecteurs et qui doit ensuite être dévié vers les rouleaux. Or, comme le fourrage qui frappe les déflecteurs, subit un certain freinage et comme ces déflecteurs s'étendent verticalement, il peut arriver que dans certaines conditions, du fourrage projeté contre les déflecteurs tombe sur le sol sans pénétrer entre les rouleaux.

Les déflecteurs de cette faucheuse-conditionneuse connue comportent en sus un bord avant réalisé sous forme d'arête vive s'étendant très près du tambour qui surmonte l'organe de coupe extérieur correspondant. Ceci présente un grand inconvénient. En effet, si des brins de fourrage coupé arrivent dans l'espace entre le bord avant d'un déflecteur et le tambour correspondant, ceux-ci vont aussitôt s'y accrocher et créer des bourrages. Ceci est dû au fait que l'extrémité desdits brins de fourrage qui s'étend à l'extérieur du déflecteur, est tirée vers l'extérieur par la tambour tandis que l'extrémité des brins de fourrage qui s'étend à l'intérieure du déflecteur, est tirée par le flux de fourrage vers l'intérieur. De cette sorte, les brins sont pliés par l'arête vive qui les empêche de se dégager.

Le but de la présente invention est d'améliorer le fonctionnement de la faucheuse-conditionneuse connue de sorte que l'ensemble du fourrage coupé passe entre les rouleaux de conditionnement.

Dans ce but, la faucheuse-conditionneuse selon l'invention est caractérisée par le fait que la partie du déflecteur s'étendant au moins partiellement dans le flux de fourrage coupé et projeté vers l'arrière, forme avec un plan vertical faisant en vue de dessus sensiblement le même angle avec l'axe longitudinal des rouleaux que ladite partie du déflecteur, un angle aigu agencé de telle sorte que le bord supérieur du déflecteur soit plus éloigné de la partie médiane de la faucheuse-conditionneuse que son bord inférieur, et que le bord avant du déflecteur est arrondi vers l'extérieur.

Du fait que la partie du déflecteur destinée à s'étendre dans le flux de fourrage coupé et projeté vers l'arrière, forme avec un plan vertical faisant en vue de dessus sensiblement le même angle avec l'axe longitudinal des rouleaux que ladite partie du déflecteur, un angle aigu agencé de telle sorte que le bord supérieur du déflecteur soit plus éloigné de la partie médiane de la faucheuse-conditionneuse que son bord inférieur, a permis d'obtenir que tout le fourrage coupé qui est projeté contre elle, soit bien dévié vers les rouleaux. Ceci résulte en effet de l'orientation particulière de cette partie s'étendant dans le flux de fourrage, qui imprime au fourrage qu'elle dévie, outre la composante vers l'arrière une certaine composante vers le haut.

Comme ensuite le bord avant du déflecteur est arrondi vers l'extérieur, les brins de fourrage qui arrivent au niveau dudit bord avant, peuvent être entraînés par le reste du fourrage projeté vers l'arrière en glissant sur ce bord avant sans pouvoir y rester accrochés. Le fait que l'arrondi est dirigé vers l'extérieur permet d'obtenir une bonne continuité entre le bord avant et la partie plane qui dévie le fourrage.

Selon une réalisation préférentielle de la partie du déflecteur s'étendant dans le flux du fourrage coupé et projeté vers l'arrière est agencée dans le voisinage de la face interne de la paroi latérale correspondante.

Avantageusement, le déflecteur fait avec la direction de l'axe longitudinal des rouleaux un angle compris entre 55° et 85°.

Avantageusement également l'angle aigu entre la partie destinée à s'étendre dans le flux de fourrage coupé et le plan vertical défini ci-avant a une valeur comprise entre 5° et 20°.

Dans une forme préférée de réalisation, le bord avant du déflecteur a sensiblement la forme d'une portion de surface cylindrique.

Pour éviter que du fourrage coupe puisse s'introduire entre le déflecteur et le bord avant de la paroi latérale correspondante, il est avantageux que le bord avant du déflecteur entoure au moins partiellement le bord avant de la paroi latérale correspondante.

Lorsque l'organe de coupe s'étendant le plus près de la paroi latérale correspondante est d'une manière connue en soi surmonté d'un tambour tournant, il est avantageux que le bord avant du déflecteur s'étende relativement près et au moins sensiblement parallèlement à la surface extérieure du tambour.

Avantageusement, le déflecteur est lié à la paroi latérale correspondante.

Préférentiellement, le déflecteur est lié de manière amovible à la paroi latérale correspondante. De cette sorte, il peut être facilement remplacé lorsqu'il est usé ou endommagé, ou enlevé lorsque dans certaines conditions de fourrage bien spécifiques, sa présence pourrait s'avérer désavantageuse.

D'autres caractéristiques et avantages de l'invention apparaîtront dans la description ci-dessous d'un exemple de réalisation non limitatif se référant au dessin annexé sur lequel :

– La figure 1 représente schématiquement une vue de dessus partielle en coupe suivant le plan I-I défini sur la figure 2 d'une faucheuse-conditionneuse selon l'invention,

– La figure 2 représente une coupe suivant le plan II-II défini sur la figure 1 de la faucheuse-conditionneuse de la figure 1,

– La figure 3 représente une vue de devant suivant la flèche III définie sur la figure 1 de la faucheuse-conditionneuse des figures 1 et 2, et

– La figure 4 représente une coupe partielle suivant le plan IV-IV défini sur la figure 1.

La faucheuse-conditionneuse de l'invention comporte un groupe de fauche (1) muni de manière non limitative de quatre organes de coupe (2, 3). Dans l'exemple représenté, les organes de coupe (2, 3) sont guidés en rotation à la face supérieure d'un carter (4) et tournent autour d'axes (5) dirigés vers le haut. Ces organes de coupe (2, 3) s'étendent transversalement à la direction de travail (6).

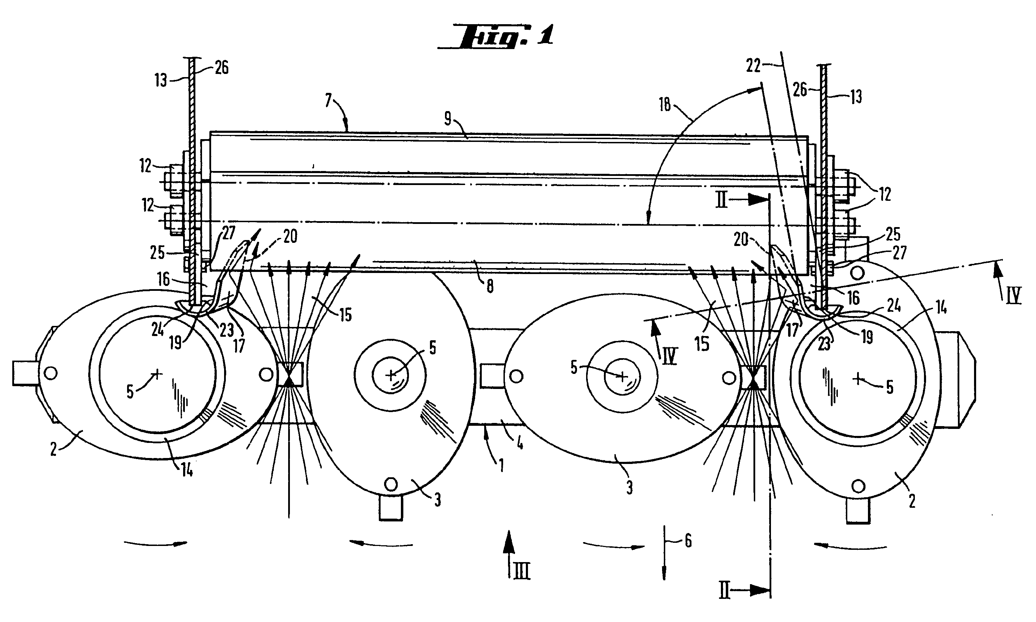

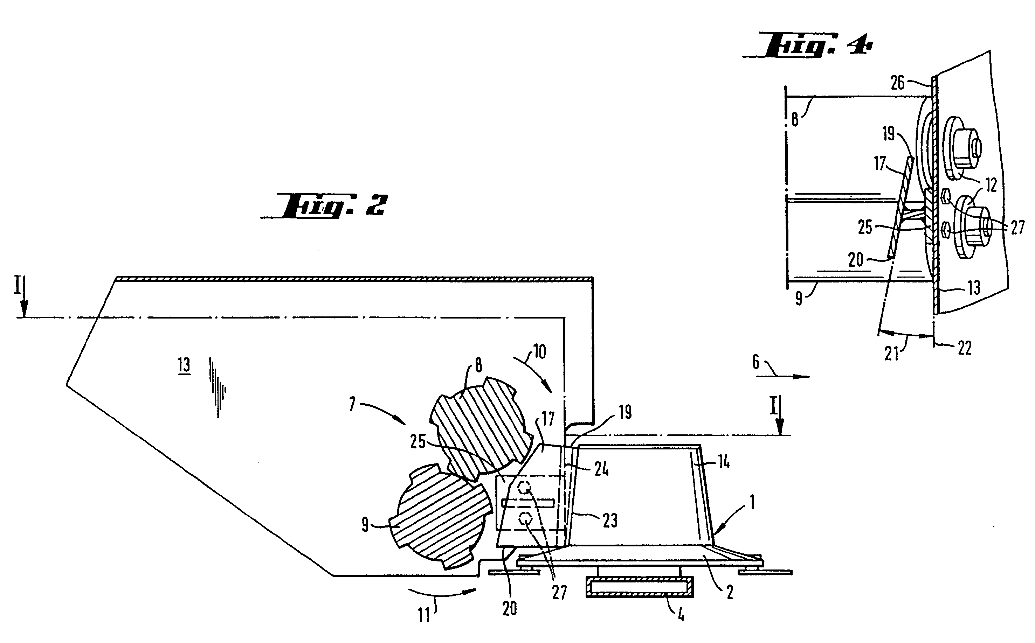

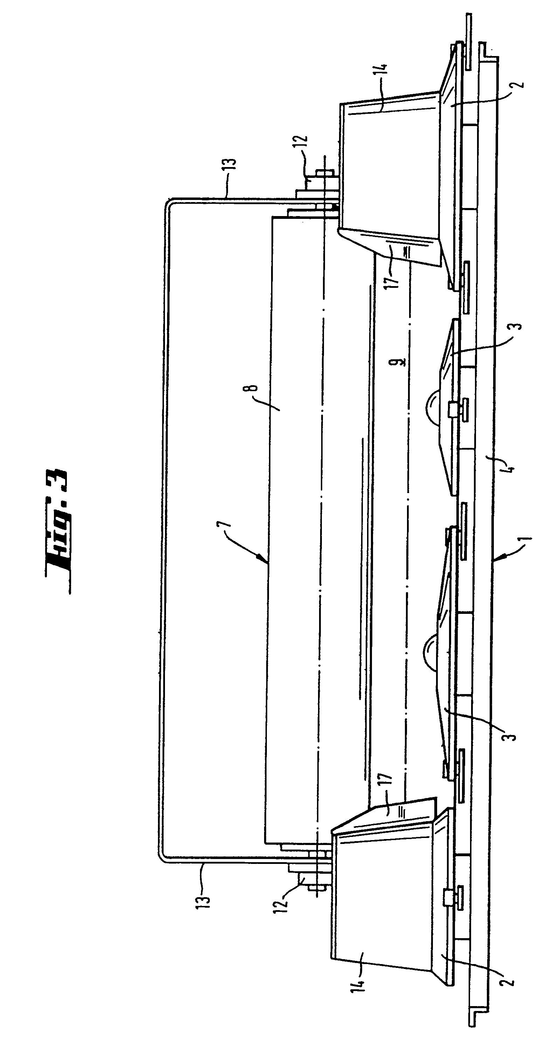

Derrière le groupe de fauche (1) s'étend un groupe de conditionnement (7). Ce groupe de conditionnement (7) comporte deux rouleaux (8, 9) tournant en sens inverse suivant les flèches (10, 11) définies sur la figure 2, de sorte que le fourrage coupé par les organes de coupe (2, 3) passe entre lesdits rouleaux (8, 9). Ces rouleaux (8, 9) sont guidés en rotation dans des paliers (12) aménagés sur des parois latérales (13). Ces parois latérales (13) s'étendent sensiblement verticalement et sensiblement suivant la direction de travail (6), c'est-à-dire dans l'exemple représenté, sensiblement perpendiculairement à l'axe longitudinal des rouleaux (8, 9). On voit également sur la figure 1 que chaque paroi latérale (13) s'étend derrière un tambour (14) surmontant l'organe de coupe (2) correspondant qui s'étend à chaque extrémité du groupe de fauche (1).

Au travail, les organes de coupe (2, 3) de chaque paire d'organes de coupe (2, 3) tournent suivant les sens de rotation indiqués sur la figure 1. Le fourrage coupé par chaque paire d'organes de coupe (2, 3) est ainsi sensiblement concentré dans la partie médiane entre les deux organes de coupe (2, 3) de ladite paire, puis projeté vers l'arrière suivant un flux (15).

Pour éviter que du fourrage coupé et projeté vers l'arrière par l'organe de coupe (3) de chaque paire d'organes de coupe (2, 3) puisse arriver dans la zone (16) d'où il pourrait être projeté vers l'extérieur de la paroi latérale (13) correspondante ou bien où il pourrait séjourner et éventuellement gêner le travail, on a prévu suivant l'invention un déflecteur (17). Comme visible sur les figures, ce déflecteur (17) s'étend dans le voisinage de la face interne (26) d'une paroi latérale (13) et au moins partiellement dans le flux (15) du fourrage coupé et projeté vers l'arrière par la paire d'organes de coupe (2, 3) correspondante. Ce déflecteur (17) est debout et est dirigé de manière inclinée vers l'arrière et vers la partie médiane de la faucheuse-conditionneuse de manière à former avec l'axe longitudinal des rouleaux (8, 9), un angle (18). Dans l'exemple représenté, la valeur de l'angle (18) est environ de 78°. En sus, on voit sur la figure 1 que le bord supérieur (19) du déflecteur (17) est plus éloigné de la partie médiane de groupe de fauche (1) que son bord inférieur (20). Par ailleurs, la partie du déflecteur (17) qui est destinée à arrêter les projections de fourrage pour que celles-ci n'arrivent pas dans la zone (16), est sensiblement plane et forme un angle (21) avec un plan vertical (22) faisant sensiblement le même angle avec l'axe longitudinal des rouleaux (8, 9) que le déflecteur (17). Dans l'exemple représenté, cet angle (21) a une valeur d'environ 11°. Le bord avant (23) du déflecteur (17) est arrondi vers l'extérieur et a la forme d'une portion de surface cylindrique. Comme visible, ce bord avant (23) entoure au moins partiellement le bord avant (24) de la paroi latérale (13) correspondante. On voit en sus que le bord avant (23) s'étend relativement près et sensiblement parallèlement à la surface extérieure du tambour (14) correspondant.

On voit enfin encore que le déflecteur (17) est lié de manière amovible à la paroi latérale (13) correspondante. Pour ce faire, le déflecteur (17) est muni d'une patte (25) qui est appliquée contre la face interne (26) de la paroi latérale (13) correspondante et qui y est fixée au moyen de boulons (27).

On notera que tous les organes qui n'ont pas de rapport direct avec l'objet de l'invention, tels que châssis de la faucheuse-conditionneuse, éléments d'entraînement des organes de coupe (2, 3) et des rouleaux de conditionnement (8, 9), etc... n'ont pas été représentés et décrits car ils sont à la portée de l'homme de l'art.

On pourra enfin apporter différentes modifications ou améliorations à l'exemple de réalisation décrit sans qu'on ne sorte pour autant du cadre de la présente invention.

## Revendications

1. Faucheuse-conditionneuse comportant au moins un groupe de fauche (1) muni d'organes de coupe (2, 3) tournant autour d'axes (5) dirigés vers le haut et un groupe de conditionnement (7) associé audit groupe de fauche (1) et muni de rouleaux de conditionnement (8, 9) entre lesquels passe le fourrage coupé par les organes de coupe (2, 3), lesdits rouleaux de conditionnement (8, 9) étant guidés en rotation à chacune de leurs extrémités dans un palier (12) solidaire d'une paroi latérale (13) correspondante dans le voisinage de laquelle est agencé un déflecteur (17) s'étendant au moins partiellement dans le flux (15) du fourrage coupé et projeté vers l'arrière par la paire d'organes de coupe (2, 3) agencés près de ladite paroi latérale (13), ledit déflecteur (17) étant debout et dirigé de manière inclinée vers l'arrière, compte tenu du sens de travail (6) et vers le partie médiane de la faucheuse-conditionneuse, la partie dudit déflecteur (17) s'étendant au moins partiellement dans le flux (15) du fourrage coupé et projeté vers l'arrière étant sensiblement plane, caractérisé par le fait que ladite partie du déflecteur (17) forme avec un plan vertical (22) faisant en vue de dessus sensiblement le même angle (18) avec l'axe longitudinal des rouleaux (8, 9) que ladite partie du déflecteur (17), un angle aigu (21) agencé de telle sorte que le bord supérieur (19) du déflecteur (17) soit plus éloigné de la partie médiane de la faucheuse-conditionneuse que son bord inférieur (20), et que le bord avant (23) du déflecteur (17) est arrondi vers l'extérieur.

2. Faucheuse-conditionneuse selon la revendication 1, caractérisée par le fait que la partie du déflecteur (17) s'étendant dans le flux (15) du fourrage coupé et projeté vers l'arrière est agencé dans le voisinage de la face interne (26) de la paroi latérale (13) correspondante.

3. Faucheuse-conditionneuse selon l'une au moins des revendications 1 ou 2, caractérisée par le fait que le déflecteur (17) fait avec la direction de l'axe longitudinal des rouleaux (8, 9), un angle (18) compris entre 55° et 85°.

4. Faucheuse-conditionneuse selon la revendication 3, caractérisée par le fait que le déflecteur (17) fait avec la direction de l'axe longitudinal des rouleaux (8, 9), un angle (18) d'environ 78°.

5. Faucheuse-conditionneuse selon l'une au moins des revendications précédentes, caractérisée par le fait que l'angle aigu (21) a une valeur comprise entre 5° et 20°.

6. Faucheuse-conditionneuse selon la revendication 5, caractérisée par le fait que ledit angle (21) est environ de 11°.

7. Faucheuse-conditionneuse selon l'une au moins des revendications précédentes, caractérisée par le fait que l'organe de coupe (2) s'étendant le plus près de ladite paroi latérale (13) est, d'une manière connue en soi, surmonté d'un tambour (14) tournant.

8. Faucheuse-conditionneuse selon la revendication 7, caractérisée par le fait que ladite paroi latérale (13) s'étend – vue suivant la direction de travail (6) – d'une manière connue en soi, derrière ledit tambour (14).

9. Faucheuse-conditionneuse selon l'une au moins des revendications précédentes, caractérisée par le fait que le bord avant (23) du déflecteur (17) a sensiblement la forme d'une porte de surface cylindrique.

10. Faucheuse-conditionneuse selon l'une au moins des revendications précédentes, caractérisée par le fait que le bord avant (23) du déflecteur (17) entoure au moins partiellement le bord avant (24) de la paroi latérale (13) correspondante.

11. Faucheuse-conditionneuse selon l'une au moins des revendications 7 ou 8, caractérisée par le fait que le bord avant (23) du déflecteur (17) s'étend relativement près et au moins sensiblement parallèlement à la surface extérieure du tambour (14).

12. Faucheuse-conditionneuse selon l'une au moins des revendications précédentes, caractérisée par le fait que le déflecteur (17) est lié à la paroi latérale (13) correspondante.

13. Faucheuse-conditionneuse selon la revendication 12, caractérisée par le fait que le déflecteur (17) est lié de manière amovible à la paroi latérale (13) correspondante.

## Ansprüche

1. Mäh- und Grasknickmaschine mit zumindest einer Mähergruppe (1), ausgestattet mit um aufrechtstehende Achsen (5) rotierenden Schneidorganen (2, 3) und einer der Mähergruppe (1) zugeordneten Grasknickergruppe (7), die mit Knickwalzen (8, 9) versehen ist, zwischen welchen das von den Schneidorganen (2, 3) geschnittene Futter hindurchtritt, welche Knickwalzen (8, 9) an jedem Ende in einem Lager (12) rotierend geführt sind, das fest mit einer entsprechenden Seitenwand (13) verbunden ist, in deren Nähe ein Abweiser (17) angeordnet ist, der zumindest teilweise in den Strom (15) des geschnittenen und von dem nahe der Seitenwand (13) angeordneten Schneidorganpaar (2, 3) nach hinten geworfenen Futters ragt, wobei der Abweiser (17) aufrecht steht und schräg nach hinten in bezug auf die Arbeitsrichtung (6) und zum Mittelteil der Mäh- und Grasknickmaschine gerichtet ist und der Teil des Abweisers (17) der zumindest teilweise in den Strom (15) des geschnittenen und nach hinten geworfenen Futters ragt, im wesentlichen eben ist, dadurch gekennzeichnet, dass dieser Teil des Abweisers (17) mit einer Vertikalebene (22), die in Draufsicht mit der Längsachse der Walzen (8, 9) im wesentlichen den gleichen Winkel (18) einschliesst, wie dieser Teil des Abweisers (17), einen Spitzen Winkel (21) bildet, derart, dass der obere Rand (19) des Abweisers (17) weiter vom Mittelteil der Mäh- und Grasknickmaschine entfernt ist als sein unterer Rand (20) und dass der vordere Rand (23) des Abweisers (17) nach aussen gerundet ist.

2. Mäh- und Grasknickmaschine nach Anspruch 1, dadurch gekennzeichnet, dass der in den Strom (15) des geschnittenen und nach hinten geworfenen Futters ragende Teil des Abweisers (17) in der Nähe der Innenseite (26) der entsprechenden Seitenwand (13) angeordnet ist.

3. Mäh- und Grasknickmaschine nach zumindest einem der Ansprüche 1 oder 2, dadurch gekennzeichnet, dass der Abweiser (17) mit der Richtung der Längsachse der Walzen (8, 9) einen Winkel (18) zwischen 55° und 85° einschliesst.

4. Mäh- und Grasknickmaschine nach Anspruch 3, dadurch gekennzeichnet, daß der Abweiser (17) mit der Richtung der Längsachse der Walzen (8, 9) einen Winkel (18) von etwa 78° einschließt.

5. Mäh- und Grasknickmaschine nach zumindest einem der vorhergehenden Ansprüche, dadurch gekennzeichnet, daß der spitze Winkel (21) einen Wert zwischen 5° und 20° hat.

6. Mäh- und Grasknickmaschine nach Anspruch 5, dadurch gekennzeichnet, daß der Winkel (21) etwa 11° beträgt.

7. Mäh- und Grasknickmaschine nach zumindest einem der vorhergehenden Ansprüche, dadurch gekennzeichnet, daß über dem am nächsten zur Seitenwand (13) reichenden Schneidorgan (2) in an sich bekannter Weise eine rotierende Trommel (14) angeordnet ist.

8. Mäh- und Grasknickmaschine nach Anspruch 7, dadurch gekennzeichnet, daß die Seitenwand (13) – in Arbeitsrichtung (6) gesehen – in an sich bekannter Weise hinter die Trommel (14) ragt.

9. Mäh- und Grasknickmaschine nach zumindest einem der vorhergehenden Ansprüche, dadurch gekennzeichnet, daß der vordere Rand (23) des Abweisers (17) im wesentlichen die Form eines Teils einer Zylinderfläche hat.

10. Mäh- und Grasknickmaschine nach zumindest einem der vorhergehenden Ansprüche, dadurch gekennzeichnet, daß der vordere Rand (23) des Abweisers (17) zumindest teilweise den vorderen Rand (24) der entsprechenden Seitenwand (13) umgibt.

11. Mäh- und Grasknickmaschine nach zumindest einem der Ansprüche 7 oder 8, dadurch gekennzeichnet, daß sich der vordere Rand (23) des Abweisers (17), relativ nahe der und zumindest im wesentlichen parallel zur Außenfläche der Trommel (14) erstreckt.

12. Mäh- und Grasknickmaschine nach zumindest einem der vorhergehenden Ansprüche, dadurch gekennzeichnet, daß der Abweiser (17) mit der entsprechenden Seitenwand (13) verbunden ist.

13. Mäh- und Grasknickmaschine nach Anspruch 12, dadurch gekennzeichnet, daß der Abweiser lösbar mit der entsprechenden Seitenwand (13) verbunden ist.

## Claims

1. A mower/conditioner comprising at least one mower unit (1) equipped with cutter members (2, 3) rotating about upwardly directed axes (5), and a conditioning unit (7) associated with the said mower unit (1) and equipped with conditioning rollers (8, 9) between which the fodder cut by the cutter members (2, 3) passes, the said conditioning rollers (8, 9) being guided in rotation at each of their ends in a bearing (12) which is integrally connected to a corresponding lateral wall (13) in the vicinity of which is arranged a deflector (17) which extends at least partially into the flow (15) of the fodder which has been cut and projected rearwards by the pair of cutter members (2, 3) arranged close to the said lateral wall (13), the said deflector (17) being arranged upright and inclined rearwardly taking into account the direction of work (6) and towards the medium part of the mower/conditioner, where the part of the said deflector (17) which extends at least partially into the flow (15) of the fodder which has been cut and projected rearwards is substantially flat, characterised in that with a vertical plane (22) which, when viewed from above, substantially forms the same angle (18) with the longitudinal axis of the rollers (8, 9) as the said part of the deflector (17), the said part of the deflector (17) forms an acute angle (21) arranged such that the upper edge (19) of the deflector (17) is further removed from the median part of the mower/conditioner than its lower edge (20), and that the front edge (23) of the deflector (17) is rounded towards the exterior.

2. A mower/conditioner as claimed in Claim 1, characterised in that the part of the deflector (17) which extends into the flow (15) of the fodder which has been cut and protected rearwards is arranged in the vicinity of the internal surface (26) of the corresponding lateral wall (13).

3. A mower/conditioner as claimed in at least one of Claims 1 or 2, characterised in that the deflector (17) forms an angle (18) of between 55° and 85° with the direction of the longitudinal axis of the rollers (8, 9).

4. A mower/conditioner as claimed in Claim 3, characterised in that the deflector (17) forms an angle (18) of approximately 78° with the direction of the longitudinal axis of the roller (8, 9).

5. A mower/conditioner as claimed in at least one of the preceding Claims, characterised in that the acute angle (21) has a value of between 5° and 20°.

6. A mower/conditioner as claimed in Claim 5, characterised in that the said angle (21) is approximately 11°.

7. A mower/conditioner as claimed in at least one of the preceding Claims, characterised in that in a manner known per se a rotating drum (14) is mounted over the cutter member (2) which extends closest to the said lateral wall (13).

8. A mower/conditioner as claimed in Claim 7, characterised in that the said lateral wall (13) extends – viewed in accordance with the direction of work (6) – behind the said drum (14) in a manner known per se.

9. A mower/conditioner as claimed in at least one of the preceding Claims, characterised in that the front edge (23) of the deflector (17) substantially has the shape of a portion of a cylindrical surface.

10. A mower/conditioner as claimed in at least one of the preceding Claims, characterised in that the front edge (23) of the deflector (17) at least partially surrounds the front edge (24) of the corresponding lateral wall (13).

11. A mower/conditioner as claimed in at least one of Claims 7 or 8, characterised in that the front edge (23) of the deflector (17) extends relatively close to and at least substantially in parallel to the outer surface of the drum (14).

12. A mower/conditioner as claimed in at least one of the preceding Claims, characterised in that the deflector (17) is connected to the corresponding lateral wall (13).

13. A mower/conditioner as claimed in Claim 12, characterised in that the deflector (17) is connected in a removable fashion to the corresponding lateral wall (13).

Fig. 1

*Fig. 4*

*Fig. 2*

EP 0 297 011 B1

Fig. 3